# EUROPEAN PATENT SPECIFICATION

(11) **EP 3 066 262 B1**
(45) Date of publication and mention of the grant of the patent: **09.01.2019**
(21) Application number: 14860327.7
(22) Date of filing: 03.11.2014
(51) Int. Cl.: E01D 22/00, E02D 29/067, E04G 23/02

(54) **METHOD FOR STRENGTHENING A STRUCTURE OF A TUBULAR BRIDGE OR A CULVERT AND THE STRENGTHENED TUBULAR BRIDGE OR CULVERT**
VERFAHREN ZUR VERSTÄRKUNG EINER STRUKTUR EINER RÖHRENFÖRMIGEN BRÜCKE ODER EINES KANALS UND VERSTÄRKTE ROHRFÖRMIGE BRÜCKE ODER KANAL
PROCÉDÉ POUR RENFORCER UNE STRUCTURE DE PONT TUBULAIRE OU DE PONCEAU, ET PONT TUBULAIRE OU PONCEAU RENFORCÉ ASSOCIÉ

(30) Priority: 06.11.2013 FI 20136096
(43) Date of publication of application: 14.09.2016
(73) Proprietor: Skanska Infra OY, 00270 Helsinki (FI)
(72) Inventor: TIKKAMÄKI, Janne, FI-04600 Mäntsälä (FI); SIEKKELI, Jukka, FI-03400 Vihti (FI)
(74) Representative: Salomäki, Juha Kari Ensio
(86) International application number: PCT/FI2014/050823
(87) International publication number: WO 2015/067851

(56) References cited:
- WO-A1-2009/075647
- DE-A1- 2 811 237
- JP-A- 2005 232 954
- US-A- 1 929 817
- US-A- 2 081 872
- US-A- 2 290 791
- US-A1- 2011 010 907
- US-B1- 6 703 091
- US-B1- 8 096 730

## Description

The object of the invention is a method as defined in the preamble of claim 1 for strengthening a tubular bridge or culvert, and the strengthened tubular bridge or culvert as defined in the preamble of claim 10.

The solution according to the invention is suited e.g. for repairing damaged pipe culverts that are in use and made under railways, highways and streets and other such overland traffic routes by strengthening them *in situ*, or also for strengthening or modifying undamaged pipe culverts in such a way that the structure of the pipe culvert is strengthened by strengthening the otherwise undamaged pipe of the pipe culvert e.g. when the loading classification of the pipe culvert changes. Hereinafter the term "repair" or "repairing" is also used for the term "strengthening", and it therefore refers to both to the repair of a damaged pipe culvert for making it intact and to the strengthening of a pipe culvert that is possibly too weak so that it will withstand a heavier load. In both cases the method and the construction components to be used are essentially similar.

The term pipe culvert in this application means different-sized tubular bridges and culverts that are laid through an embankment from the first side of the embankment to the second side of it, and in which generally, or at least at times, water flows.

The structure in pipe culverts is often e.g. a pipe of cylindrical or elliptical cross-sectional shape made from corrugated galvanized steel, either a spiral-weld pipe or a pipe fabricated from multiple plates, which pipe is fitted to run e.g. through an embankment of an accessway that is above it, and via which water is able to flow to the other side of the embankment. Although a steel pipe is coated to withstand outdoor conditions, the coating of a pipe deteriorates over time, particularly at the point of the water surface on both edges of the pipe. Deterioration of the coating causes rusting of the pipe, which weakens the material of the pipe and therefore reduces the load-bearing capability of the pipe in such a way that the pipe culvert can collapse. For this reason pipe culverts must be inspected from time to time and when rusting has progressed too far, the steel pipe of the pipe culvert must be strengthened by repair or replacement, or a new pipe culvert must be made in its place. It can also happen that the loading of the accessway passing over a pipe culvert changes to become heavier, in which case the pipe of a pipe culvert originally designed for a smaller loading will not withstand the new higher loading. For this reason, even an undamaged pipe of a pipe culvert must be strengthened. The method according to the invention and the structure produced with the method are well suited to this purpose.

The steel pipes of a pipe culvert are typically a number of meters below the surface of e.g. a road and they might be some tens of meters long, so that removing the steel pipe of an old pipe culvert and installing a new one in its place by excavating is an extremely slow and expensive procedure, and causes a traffic obstruction of long duration.

Known methods for strengthening a tubular bridge or culvert are described in US 2 290 791 A and US 2 081 872 A.

An old pipe culvert can be repaired according to prior art also e.g. in such a way that a steel pipe of the next smaller size in diameter, which fits inside the old steel pipe, is pushed inside the steel pipe from the end of the steel pipe. This repair method is, however, extremely laborious and requires a large crane, e.g. when handling long steel pipes that are deep, with which crane a new steel pipe can be lowered to the correct depth and then pushed inside the old steel pipe. Often in this case the whole road must be closed to traffic during placement of the new steel pipe into its position. In addition, not all pipe culverts can be repaired in this way, because a suitable smaller size is not available for all pipe sizes and cross-sectional shapes. Another problem is that a new steel pipe can reduce the aperture of a pipe culvert too much. One further problem is that concrete used as a filler cannot be used as a strength-improving material because e.g. steel reinforcement elements cannot be disposed in the concrete sufficiently precisely. One further problem is that it can be difficult or impossible to place a new steel pipe of a slightly smaller diameter into steel pipes that sag or whose shape has changed over time.

One alternative for repairing a damaged pipe culvert is to bore a new location for a steel pipe next to the old pipe culvert and to fill in the old pipe culvert. This solution, however, is a slow and extremely expensive solution.

A common problem for all repair methods according to prior art is also that the repair of each pipe culvert must be planned separately and old pipe culverts must be visited for precise on-site measuring before starting the planning. This lengthens the delivery time and raises the repair costs.

The aim of this invention is to reduce and eliminate the aforementioned drawbacks by achieving a new type of method that is inexpensive, reliable and quick for strengthening a tubular bridge or culvert that is in use and is either damaged or otherwise too weak. Additionally the purpose of the invention is to achieve a reliably strengthened and/or repaired and longlasting tubular bridge or culvert. The method according to the invention is characterized by what is presented in the characterization part of claim 1. Correspondingly the tubular bridge or culvert according to the invention is characterized by what is presented in the characterization part of claim 10. Other embodiments of the invention are characterized by what is disclosed in the other claims.

One advantage, among others, of the solution according to the invention is the quick and easy strengthening and/or repair of a pipe culvert, in which case as little obstruction as possible is caused to traffic above the pipe culvert. Another advantage is that few parts are needed for strengthening a pipe culvert and they can be made as prefabricated modules, including rust protection, at the factory. In this case they are inexpensive in price and, since they are factory-prefabricated, very dimensionally precise. A further advantage is that by using the same modules, pipe culvert steel pipes having diameters of different sizes and shapes can be strengthened and repaired. In this case also the planning of strengthenings and repairs becomes easier, in which case almost all pipe culverts can be strengthened and repaired with a single set of instructions. Additionally another advantage is that the parts needed for the strengthening work are small so they are easy to transport to the repair site and easy to lower with even a small crane to the point of the pipe culvert to be strengthened. In this case also the disturbance to traffic passing over the pipe culvert is as small as possible, because only a little road space is needed and only for a short time.

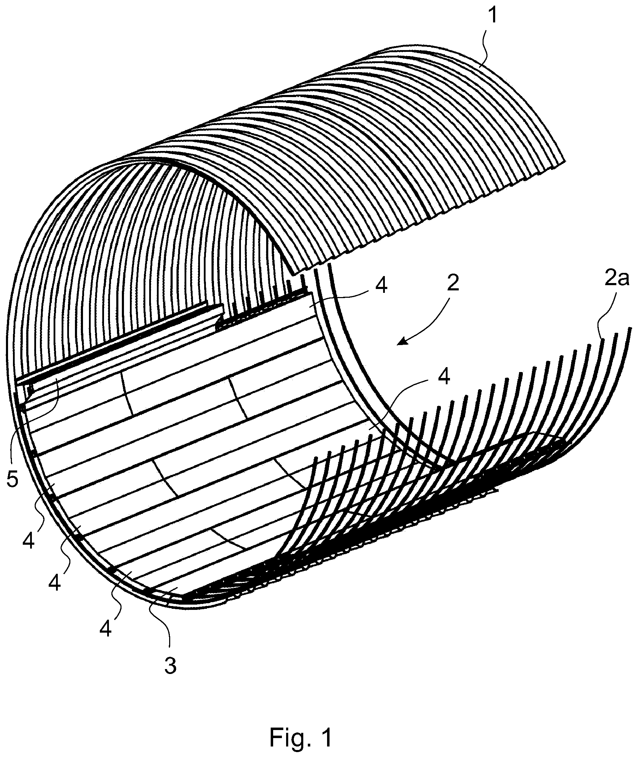

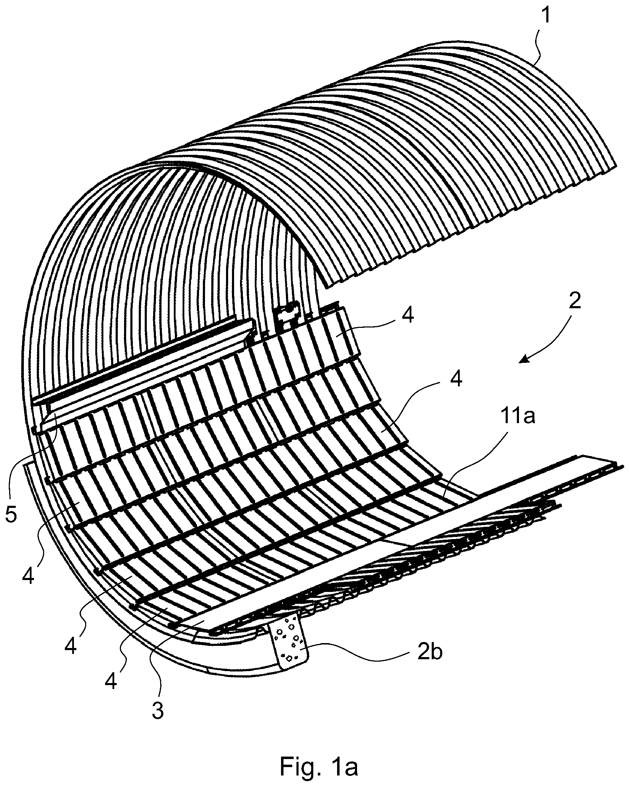

In the following the invention will be described in more detail by the aid of one example of its embodiment with reference to the attached drawings, wherein
- Fig. 1: presents a simplified, diagrammatic and oblique view from above of one method and structure according to the invention for strengthening a pipe culvert, when partially sectioned,
- Fig. 1 a: presents a simplified, diagrammatic and oblique view from above of one method and structure according to the invention for strengthening a pipe culvert, when provided with additional reinforcement, and when partially sectioned,
- Fig. 2: presents the bottom part of a partly strengthened pipe culvert, as viewed from the end,
- Fig. 3: presents a simplified and diagrammatic oblique top view of the strengthening according to the invention of a pipe culvert, partially sectioned in such a way that the fixing of the ends of the bar reinforcement is visible,
- Fig. 4: presents a magnified view of a fixing point of the bar reinforcement visible in Fig. 3,
- Fig. 5: presents the area A of Fig. 5, in which area the fixing point of the bar reinforcement is visible in greater magnification,
- Fig. 6: presents an oblique top view of one clamp part for the ends of the bar reinforcement to be used in the solution according to the invention, said clamp part being detached,
- Fig. 7: presents an oblique top view of one modular mold element, according to the invention, to be used for the strengthening of a pipe culvert,
- Fig. 8: presents a magnified and oblique top view of the start end of the first edge of the mold element according to Fig. 7,
- Fig. 9: presents a magnified and oblique top view of the start end of the second edge of the mold element according to Fig. 7,
- Fig. 10: presents an oblique top view of a second modular mold element, according to the invention, to be used for the strengthening of a pipe culvert,
- Fig. 11: presents a magnified and oblique top view of the start end of the first edge of the mold element according to Fig. 10,
- Fig. 12: presents a magnified and oblique top view of the start end of the second edge of the mold element according to Fig. 10,
- Fig. 13: presents an oblique top view of an uppermost modular mold element, according to the invention, to be used for the strengthening of a pipe culvert,
- Fig. 14: presents a part of the mold element according to Fig. 13, as viewed obliquely from behind and above.
- Fig. 15: presents one method, as viewed from the end, for strengthening a pipe culvert in the top part of the steel pipe of the pipe culvert before fixing the uppermost mold module that is adjustable in width,
- Fig. 16: presents the method, as viewed from the end, according to Fig. 15 for strengthening a pipe culvert in the top part of the steel pipe of the pipe culvert in the phase in which the first part of the uppermost mold module that is adjustable in width has been placed into position, and
- Fig. 17: presents the method, as viewed from the end, according to Fig. 15 for strengthening a pipe culvert in the top part of the steel pipe of the pipe culvert in the phase in which the uppermost mold module that is adjustable in width has been placed into its position.

Figs. 1, 2 and 3 present one typical corrugated spiral-weld steel pipe 1 used in pipe culverts, which is just being strengthened in the manner presented by the method according to the invention. In the figures, a part of the steel pipe 1 has been cut away to improve illustration, and likewise the steel pipe 1 has been shortened. The diameter of these types of steel pipes 1 to be used as pipe culverts is often over 2 meters and the length can be several tens of meters. Generally a steel pipe 1 becomes damaged over time by rusting in the area of the interface between the water running through the culvert and the air, which interface is often slightly below the center line of the steel pipe 1. The surface height of the water varies, so the damaged area can be a few centimeters wide and often the whole length of the steel pipe 1.

With the method according to the invention a damaged steel pipe 1 and a weak steel pipe 1 needing strengthening are repaired by means of a thin layer of steel-reinforced concrete, by casting a wet mix of fresh concrete into a mold 2 fixed to the surface of the bottom part of the steel pipe 1 and by reinforcing the cast with concrete reinforcement, the individual ribbed reinforcement bars 2a of which are disposed, before the assembly of the mold 2, in the troughs between the crests of the corrugated steel pipe 1 and are raised, e.g. supported by the mold 2, off the inside surface of the steel pipe 1, to a distance from the inside surface of the steel pipe 1 that is precisely correct from the viewpoint of strength. The ribbed reinforcement bars 2a can be raised to the desired location also by supporting them on the inside surface of an existing steel pipe 1.

For the purposes of transport and handling, it is advantageous to fabricate the ribbed reinforcement bars 2a to extend only from above the damage point of the steel pipe 1 to roughly the base of the steel pipe 1. In this case two ribbed reinforcement bars 2a are disposed in one trough of the steel pipe, which bars are connected to each other as an extension in the middle of the base of the steel pipe 1. The connecting is done with separate coupling parts or with only steel wire. Additionally, the ribbed reinforcement bars 2a are fastened at their top ends to the steel pipe 1, to an undamaged point above the damage area. The fastening can be done in a fixed manner or using a filler, e.g. freshly mixed concrete, for transmitting forces from the ribbed bars to an intermediate piece fixed to the old structure. When strengthening an undamaged steel pipe 1 the ribbed reinforcement bars 2a are fixed at their top ends to the steel pipe 1 to their points according to the strengthening plan.

When the mold 2 has been fully assembled and the ribbed reinforcement bars 2a have been raised to their correct points and fixed at their ends, the concreting is performed by pouring concrete from the top edge of the mold 2 into between the mold 2 and the inside surface of the steel pipe 1. The top edge of the mold 2 is situated on both edges of the steel pipe 1 to be higher than the damaged area of the steel pipe 1, and in undamaged steel pipes 1 that are to be strengthened at its point according to the strengthening plan.

Fig. 1a presents a simplified, diagrammatic and oblique view from above of a method and structure according to the invention for strengthening a pipe culvert, when provided with additional reinforcement and partially sectioned. In the case according to Fig. 1a the pipe culvert itself, with steel pipe 1, and the mold 2 used, with steel reinforcements, can be essentially similar to what is presented in the case of Figs. 1, 2 and 3. One difference with respect to the case presented by Figs. 1, 2 and 3 is that in the method presented by Fig. 1a the pipe culvert is strengthened more than in the method presented by Figs, 1, 2 and 3. In the additional reinforcement method presented by Fig. 1a, curved concrete reinforcements 2b in the transverse direction to the steel pipe 1 are cast under the mold 2 at the necessary intervals in the longitudinal direction of the steel pipe 1. The concrete reinforcements 2b essentially follow the curvature of the steel pipe 1 and extend at their ends e.g. to above the damage point of both edges. In Fig. 1a the concrete reinforcement 2b has been truncated to be shorter than its normal length.

The space for a concrete reinforcement 2b can be made in other ways. One method is to cut an aperture in the bottom part of the steel pipe 1, in the transverse direction of the steel pipe 1, and to remove the earth from under it and to cast a concrete reinforcement 2b with the necessary steel reinforcements in this space that is empty of earth, e.g. in such a way that the top surface of the concrete reinforcement 2b is essentially level with the top surface of the corrugation crests of the steel pipe 1. In the structure presented by Fig. 1a the concrete reinforcement 2b has made in the manner presented above. Another method is to press one or more corrugation crests of the steel pipe 1 outwards against the earth behind and to thus bring about a space for the concrete reinforcement 2b, said space being deeper and wider than the corrugation troughs of the steel pipe 1. Yet another possible way is to press e.g. essentially short steel molds of e.g. V-shaped cross-sectional shape through the bottom part of the steel pipe 1 into the earth surrounding it so that they sink well into the soil. The steel molds are pushed one after the other on a transverse line with respect to the longitudinal direction of the steel pipe 1, in which case the final result is a essentially a concrete reinforcement like the concrete reinforcement 2b presented by Fig. 1a, which differs from the concrete reinforcement 2b presented by Fig. 1a essentially only in respect of its cross-sectional shape and the fact that the concrete reinforcement is in a steel mold.

Figs. 1-3 and 1a present the strengthening phase or repair phase of a steel pipe 1 of a pipe culvert advanced to the stage that the ribbed reinforcement bars 2a and approx. one-half of the mold 2 are already in position. In Fig. 1a the ribbed reinforcement bars 2a are not presented, but they are used in the solution according to Fig. 1a in essentially the same way as in the solution presented by Fig. 1. The mold 2 is preferably composed of mold modules 3-5 in the longitudinal direction of the steel pipe 1, said mold modules being bent from steel sheet and suitably perforated, of which there are generally only three different ones in cross-sectional shape, i.e. a lowermost mold module 3, a middle mold module 4 and an uppermost mold module 5. From the viewpoint of the strength of the mold 2, it is good to overlap the mold modules 3-5 of the different layers with each other in the longitudinal direction, so the mold modules 3-5 are preferably of at least two different lengths, i.e. full-length and half-length. Other lengths can be made according to need, so can other widths, which can be full-width and half-width. It might be necessary to use a half-width middle mold module 4 so that the top edge of the mold 2 is brought to exactly the right height, or so that the mold 2 can be situated advantageously in relation to the damaged point of the steel pipe 1, or so that the edges of the middle and uppermost mold modules 4 and 5 can be situated advantageously compared to the existing structures, such as e.g. rows of screws, of the steel pipe 1 to be strengthened.

All the mold modules 3-5 are fabricated complete with rust protection as precisely dimensioned prefabricated units and, wherever practical, in large production series, in which case they are quick to manufacture and their manufacturing costs are low. The mold modules 3-5 are made to be suitably lightweight and short for transport and handling and also in such a way that they can be continued in the longitudinal direction when assembling a mold 2. In addition, the mold modules 3-5 are essentially narrow with respect to their length and thin, in which case e.g. all the mold modules 3-5 for one pipe culvert to be strengthened easily fit into one load.

In the situation according to Figs. 1 and 1a, the lowermost mold modules 3 are fixed into position, e.g. with a screw fixing, consecutively to each other in the longitudinal directional of the steel pipe 1 and in the center of the base of the steel pipe 1. A lowermost mold module 3 is always full length. Only the last mold module 3 of the row is truncated, if necessary, to be shorter if it may not extend to outside the end of the steel pipe 1. When the lowermost mold module 3 is in its position, the ribbed reinforcement bars 2a that are under the mold module 3 are lifted out of the troughs of the steel pipe 1 and suspended, as well as supported, on the edge of the mold module 3 in such a way that on each side around the ribbed reinforcement bars 2a an empty space according to regulations remains for the concrete. The supporting of the ribbed reinforcement bars 2a can be done with e.g. thin iron rods bent into a loop, which are threaded around the bottom of the ribbed reinforcement bars 2a and fixed to the edge of the lowermost mold module 3.

After this the bottommost middle mold modules 4 are fixed as compactly as possible beside the lowermost mold modules 3, e.g. in such a way that at the starting end is first one half-length mold module 4 and the rest of the mold modules 4 in the longitudinal direction are full-length. The top edge of the mold modules 4 are fixed, e.g. with a screw fixing, to the steel pipe 1 and the protrusions on the bottom edge are fitted with shape-locking into the apertures that are in the side edge of the lowermost mold modules 3. The ribbed reinforcement bars 2a can be supported by suspending them on the edge of also this mold module 4 already, but generally the ribbed reinforcement bars 2a do not need to be suspended on the top edge of all the middle mold module rows. It is sufficient if they are suspended from a few points in such a way that they are at each of their points at a distance of an air gap of a set length from the steel pipe 1 and from the mold 2. Suspending the ribbed reinforcement bars 2a is done with the same thin iron rods as described earlier in connection with the lowermost mold modules 3.

Correspondingly, the next-to-bottommost middle mold modules 4 are fixed as compactly as possible beside the bottommost middle mold modules 4 in such a way that all the mold modules 4 in the longitudinal direction are full-length. The top edge of the mold modules 4 are fixed, e.g. with a screw fixing, to the steel pipe 1 and the protrusions on the bottom edge are fitted with shape-locking into the apertures that are in the side edge of the bottommost middle mold modules 4, which apertures correspond with the apertures that are in the side edge of the lowermost mold module3.

The fixing of middle mold modules 4 is continued in this way by starting every second row with a half-length mold module 4, until the desired height is reached to the point of the damaged area of the steel pipe 1 or to the point of the planned height of the strengthening, or to above said point. Before the uppermost mold modules 5 are fixed into position, the free ends of the ribbed reinforcement bars 2a are fixed to the steel pipe 1 by means of clamp parts 7. After this each uppermost mold module 5 is fixed into position on top of the fixed ends of the ribbed reinforcement bars 2a and on the top edge of the topmost middle mold module 4 by means of the aforementioned shape-locking. Correspondingly, the top edges of the uppermost mold modules 5 are fixed, e.g. with a screw fixing, to the steel pipe 1. The top edges of the uppermost mold modules 5 are always situated sufficiently far above the damaged area of the steel pipe 1.

When the mold 2, with ribbed reinforcement bars 2a, is ready concrete is poured into the mold 2 from the apertures that are in the top edge of the uppermost mold modules 5 and the concrete is allowed to flow downwards and to fill the mold 2 completely. The flowing downwards of the concrete can be assisted with suitable methods so that the concrete can be made to flow through the apertures in the edges of all the mold modules 3-5 to the whole area of the mold 2 and to fill the whole mold 2. After the concrete has hardened the ribbed reinforcement bars 2a are bound to each other and to the steel pipe 1, in which case both the concrete and the ribbed reinforcement bars 2a fixed to the steel pipe 1 at their top end together bear the load exerted by the mass above the steel pipe 1.

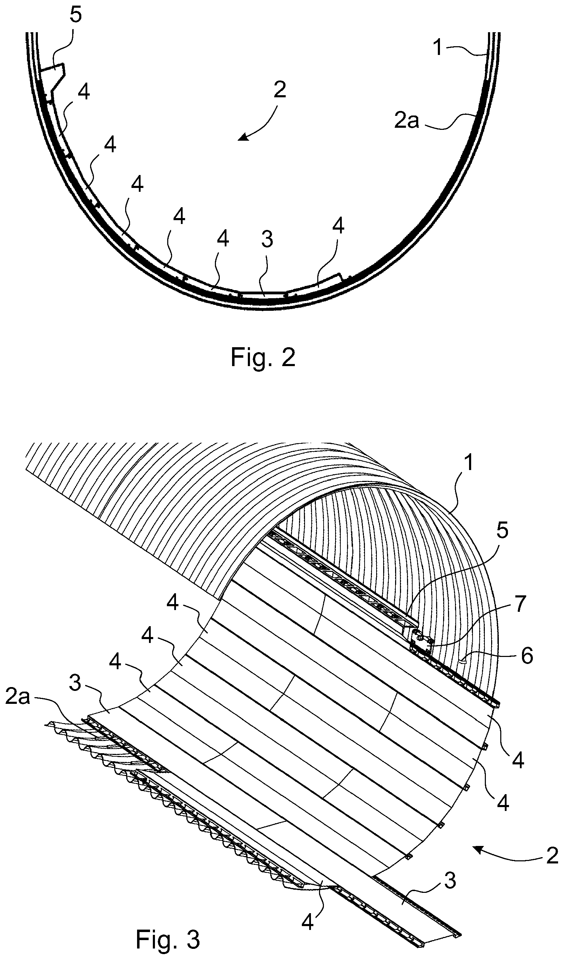

In the situation according to Fig. 2, the ribbed reinforcement bars 2a and the lowermost mold modules 3 as well as the mold modules 4 and 5 of the first side are already in position, but only the bottommost middle mold modules 4 of the mold modules of the second side are in position.

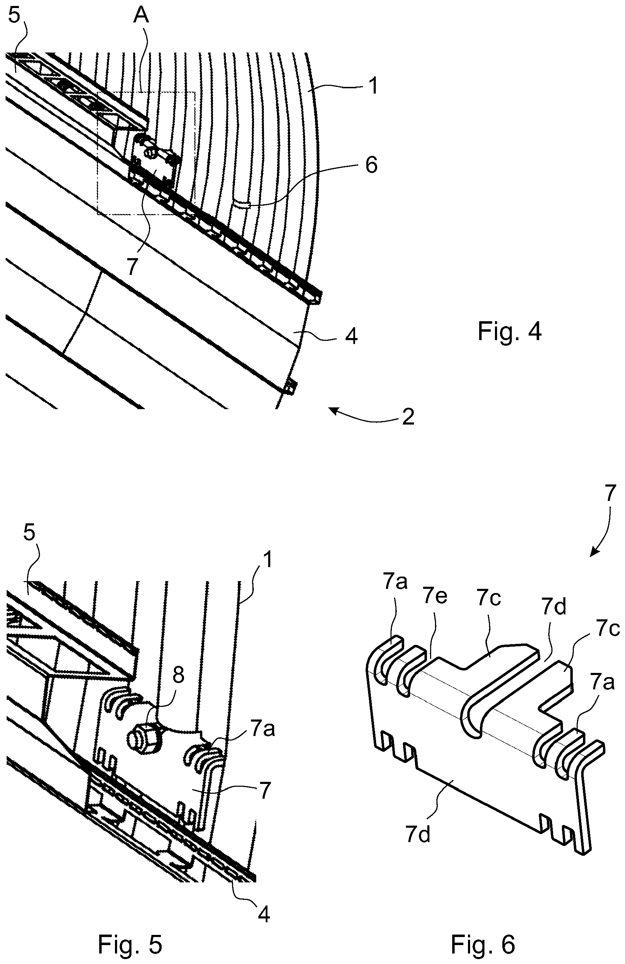

Figs. 4-6 present the fixing point of the free end of the ribbed reinforcement bars 2a and one possible clamp part 7 in magnified view. The fixing is implemented by means of a clamp part 7, with which two ribbed reinforcement bars 2a can be fixed to the steel pipe 1 with the same fixing. For the purpose of the fixing, a rectangularly-shaped aperture 6 is made in the inwardly extending crest of the corrugation of the steel pipe 1, into which aperture the two-part tongue 7c, split in the center by a notch 7d, of the clamp part 7 is pushed and the clamp part 7 is fixed with a bolt-nut joint 8 from the aforementioned aperture 6 to the steel pipe 1. Before this, the ends of ribbed reinforcement bars 2a bent in advance into the correct curved shape at the factory are fixed, preferably also at the factory, into the notches 7e in the clamp part 7, either by welding or by some other suitable fixing method.

The thickness and cross-section of the tongue 7c of a clamp part 7 essentially correspond to the height and cross-section of the aperture 6 in such a way that the tongue 7c of the clamp part can be pushed into the aperture 6 when fixing the clamp part 7 into its position. The clamp part 7 is a piece bent from steel plate to an angle of 90 degrees, the support parts 7a and tongue 7c on which extend at essentially a right angle in the direction of the rim of the steel pipe 1 and the body part 7b extends obliquely downwards. One ribbed reinforcement bar 2a in a trough on both sides of one inward-extending crest can be fixed with the same clamp part 7. A ribbed reinforcement bar 2a does not necessarily need to be in all the troughs, so that an aperture 6 does not need to be made in all the crests nor does a clamp part need to be fixed in all the crests. The structure of the clamp part 7 and the shape of the aperture 6 can be different to what is presented above. What is important is that the shearing force acting on the fixing is managed in the fixing.

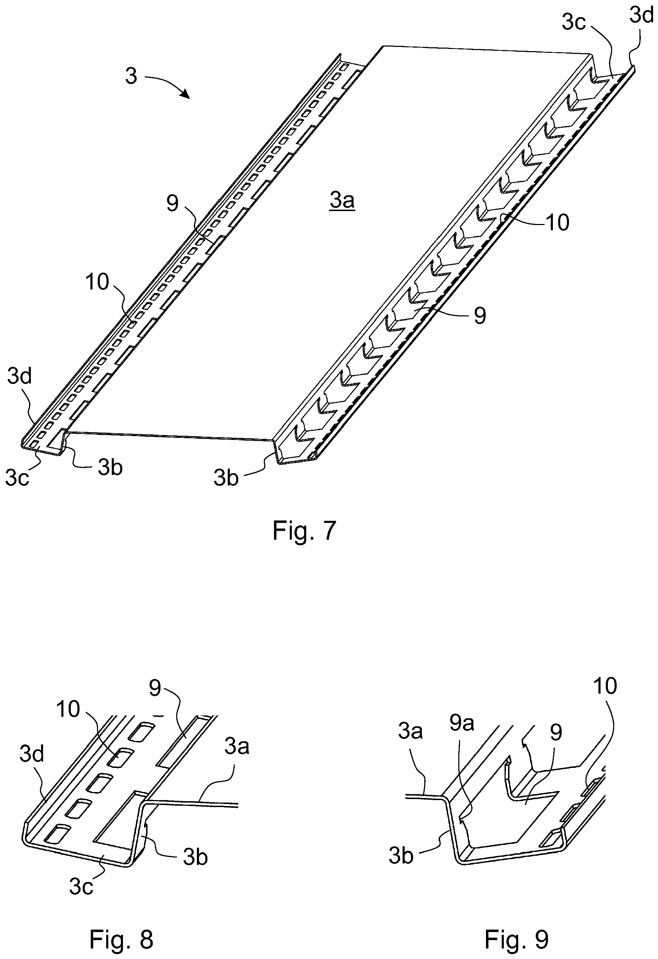

Figs. 7-9 present a part of one lowermost mold module 3, according to the invention, to be used for the strengthening of a pipe culvert. Normally the mold module 3 would be longer than in the figure, so that in Fig. 7 the mold module 3 is truncated. The lowermost mold module 3 is made e.g. from thin steel sheet by bending and by making in it the appropriate perforation. After the perforation and bending the mold module 3 is protected against rust and outdoor use e.g. by coating. The lowermost mold module 3 is symmetrical with respect to its center line in cross-section. It has a back part 3a in the center of it, on both sides of which are an almost right-angled bend 3b, on the edge of which is again an essentially right-angled bend 3c turning outwards from the center line, on the edge of which bend 3c is again a short essentially right-angled bend 3d towards the planar surface of the back part 3a. When the lowermost mold module 3 is in its position on the base of the steel pipe 1 of a pipe culvert, the aforementioned bend 3a points downwards, the bend 3b to the side in the direction of the inside surface of the steel pipe 1 and the bend 3c upwards. The bending 3d functions as a stiffener.

Near the outer edge of the bend 3c in the direction of the base of the steel pipe 1 is a row of elongated fixing holes 10 for fixing the mold module 3 to the base of the steel pipe 1 e.g. with screw fixings. The screws are fixed e.g. to the crests that are on the inside surface of the corrugated steel pipe. Correspondingly, on the line joining the bend 3c and the bend 3b is a row of apertures 9, into which a lower middle mold module 4 to be disposed beside the mold module 3 can be fixed by its protrusions in a shape-locking manner. In addition, the apertures 9 allow the concrete to flow to the base of the steel pipe 1 to below the mold module 3. The structure enables stepless fixing and, that being the case, is advantageously suited for different sites.

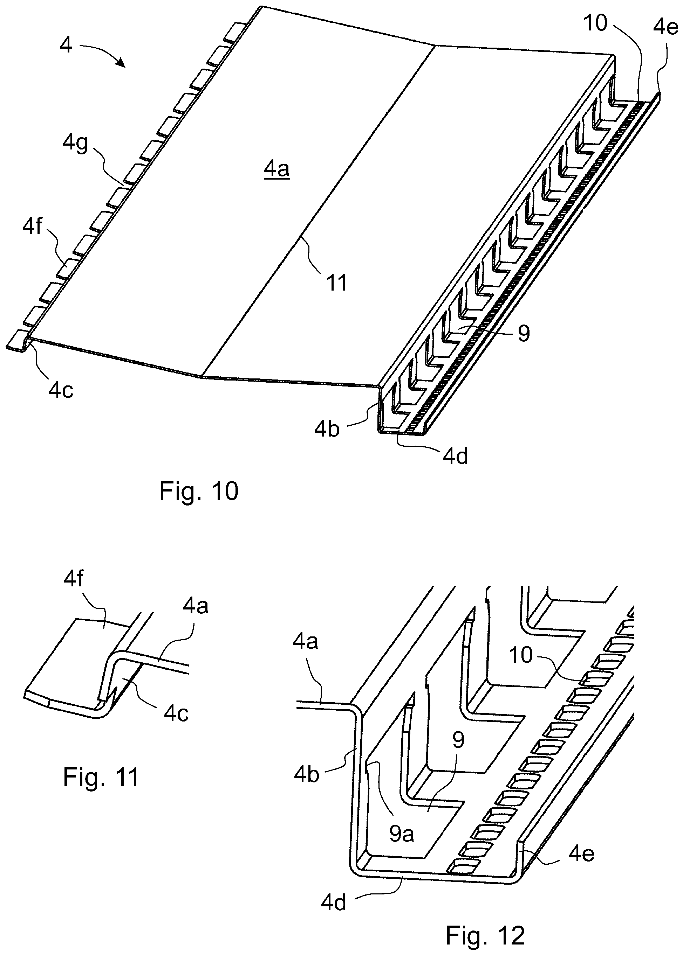

Fig. 9 presents the shape of the apertures 9 in more detail. The top part 9a of the aperture 9 in the bend 3b is symmetrically wider than the other part of the aperture 9. The height of the top part corresponds to the thickness of the protrusions 4f that are on the bottom edge of a middle module 4 and the width of the top part 9a corresponds to the width of the protrusions 4f in such a way that when fixing a middle mold module 4 into its position the protrusions 4f can be disposed in the top parts 9a of the apertures 9 and can be pushed inside them. For the fixing to succeed just by pushing the protrusions 4f into the top parts 9a of the apertures 9 and by turning the top edge of the mold module 4 against the inside surface of the steel pipe 1, the distribution of the apertures 9 is adapted to correspond to the distribution of the protrusions 4f. The protrusions 4f are described in more detail in the description of Figs. 10-12.

Figs. 10-12 present a part of one middle mold module 4, according to the invention, to be used for the strengthening of a pipe culvert. Normally the mold module 4 also would be longer than in the figure, so that in Fig. 10 the mold module 4 is truncated. A middle mold module 4 is made e.g. from thin steel sheet by bending and by making in it the appropriate perforation. After the perforation and bending the mold module 4 is protected against rust and outdoor use e.g. by coating. A middle mold module 4 is asymmetrical with respect to its center line in cross-section. It has a back part 4a provided with a longitudinal directional and stiffening fold 11 in the center, in the first side of which back part, i.e. the side to be disposed lower, is an almost right-angled bend 4c, on the edge of which is a row of protrusions 4f that are similar to each other extending outwards in an essentially orthogonal direction from the center line, which protrusions are at a distance 4g from each other. Correspondingly, on the second side of the back part 4a, i.e. the side to be disposed higher, is an almost right-angled bend 4b, on the edge of which is again an essentially right-angled bend 4d turning outwards from the center line, on the edge of which bend 3c is again a short essentially right-angled bend 4e towards the planar surface of the back part 4a.

When the middle mold module 4 is in its position on the inside surface of the steel pipe 1 of a pipe culvert, the aforementioned bends 4b and 4c point towards the inside surface of the steel pipe 1 and the protrusions 4f point towards the next lower mold module 3 or 4. Correspondingly, the bend 4d points in the direction of the inside surface of the steel pipe 1 towards the next higher mold module 4 or 5, and finally the bend 4e points at essentially a right angle outwards from the surface of the steel pipe 1. The bending 4e functions here also as a stiffener.

Near the outer edge of the bend 4d in the direction of the inside surface of the steel pipe 1 is a row of elongated fixing holes 10 for fixing the mold module 4 to the crests of the inside surface of the steel pipe 1 e.g. with screw fixings. The fixing holes 10 can also be used for suspending the ribbed reinforcement bars 2a to their correct points off the surface of the troughs of the steel pipe 1. The suspending of the ribbed reinforcement bars 2a is done in the manner presented above e.g. with thin iron rods bent into a loop, which are threaded around the bottom of the ribbed reinforcement bars 2a and fixed to the fixing holes 10 in the edge of the lowermost mold module 3, which holes are off the inside surface of the steel pipe 1 at the point of the troughs.

On the line joining the bend 4b and the bend 4d of a middle mold module 4 is a row of apertures 9, into which an upper middle mold module 4 to be disposed beside the mold module 4 can be fixed by its protrusions in a shape-locking manner. In addition, the apertures 9 allow the concrete to flow through towards the base of the steel pipe 1. On the edge of the apertures 9 on the side of the back part 4a are top parts 9a that are wider than the apertures 9, which top parts correspond in their position, size and shape with the corresponding top parts 9a of the apertures 9 of a lowermost mold module 3.

Fig. 1a presents a middle mold module, which is strengthened on its back part with a row of stiffeners 11a transverse to the mold module 4, instead of with a longitudinal directional and stiffening fold 11, which stiffeners can be e.g. troughs or crests pressed into the back part 4a. In this way the mold module 4 withstands the casting pressure in the concrete casting phase better.

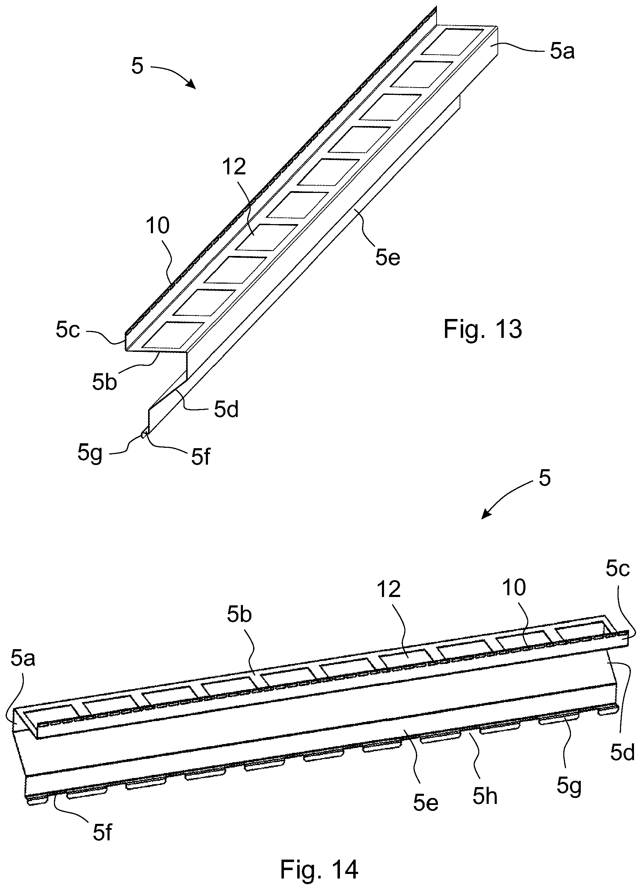

Figs. 13 and 14 present a part of one uppermost mold module 5, according to the invention, to be used for the strengthening of a pipe culvert. Normally also the mold module 5 would be longer than in the figures, so that in Figs. 13 and 14 the mold module 5 is truncated. The uppermost mold module 5 is fabricated in essentially the same way and from the same material as the mold modules 3 and 4 described earlier. The uppermost mold module 5 is also asymmetrical with respect to its center line in cross-section. It has a narrow back part 5a, in the first side of which back part, i.e. the side to be disposed lower when the mold module 5 is in its position, is a bend 5d extending obliquely towards the inside surface of the steel pipe 1, on the edge of which bend 5d is a bend 5e in the direction of the back part 5a, on the edge of which bend 5e is a bend 5f extending at a right angle towards the inside surface of the steel pipe 1, on the edge of which bend 5f is a row of protrusions 5g that are similar to each other and in essentially the direction of the inside surface of the steel pipe 1, which protrusions are at a distance 5h from each other and correspond in their distribution, size and shape with the corresponding protrusions 4f of a middle mold module.

Correspondingly, on the second side of the back part 5a, i.e. the side to be disposed higher, is an almost right-angled bend 5b, on the edge of which is again bend 5c turning at essentially a right angle outwards from the center line, i.e. essentially in the direction of the inside surface of the steel pipe 1, on the top edge of which bend 5c is a row of elongated fixing holes 10 for fixing the mold module 5 to the crests of the inside surface of the steel pipe 1 e.g. with screw fixings. The bend 5b forms, when the mold module 5 is in its position, an essentially wide top surface, in which is a row of apertures 12 for casting concrete to inside the mold 2. When the concrete has dried, the bend 5b forms, together with the concrete, a planar surface along which e.g. small animals can safely travel to the other side of the accessway that is above. In addition, the wide bend 5b enables a sufficient protective distance for the clamp parts 7 to be disposed below the mold module 5.

When the uppermost mold module 5 is in its position on the inside surface of the steel pipe 1 of a pipe culvert, the aforementioned bend 5c points upwards in the direction of the inside surface of the steel pipe 1 and the protrusions 5g point towards the next lower mold module 4, and also the bend 5d points obliquely downwards towards the inside surface of the steel pipe 1 forming a downward-tapering space for improving the flowing of concrete to inside the mold 2.

With the method according to the invention a damaged steel pipe 1 of a pipe culvert is strengthened e.g. as follows: At first the steel pipe 1 and its points of damage, or an undamaged steel pipe 1, to be strengthened is measured and the strengthening procedures are planned. After this the ribbed reinforcement bars 2a needed are cut to their correct dimensions and bent into a curve corresponding to the inside curve of the steel pipe 1. This phase can be performed at the factory or also at the worksite. On the basis of measuring and planning, a suitable number of mold modules 3-5 that are ready in stock or made exactly for this purpose, as well as fixing accessories, are selected and all the parts are transported to the worksite, and the worksite is prepared for the strengthening.

When the steel pipe 1 of the pipe culvert is fully prepared for starting the strengthening work, the fabrication of the reinforcements is started. If transverse concrete reinforcements 2b are needed under the steel pipe 1 for additional reinforcement, they are made first. In this case space for the concrete is made e.g. in one of the ways presented in connection with Fig. 1a, or in some other suitable manner. After this the ribbed reinforcement bars 2a are placed into their positions.

The mold 2 is installed by situating the ribbed reinforcement bars 2a according to plan in the troughs of the corrugated steel pipe 1. After this the necessary amount of lowermost mold modules 3 are fixed consecutively to the base of the steel pipe 1 and, if necessary, ribbed reinforcement bars 2a are suspended on the edges of the mold modules 3 off the inside surface of the steel pipe 1.

When the lowermost mold modules 3 are fixed into their positions, the bottommost middle mold modules 4 are locked at their bottom edges to the side edges of the lowermost mold modules 3 and fixed at their top edges to the inside surface of the steel pipe 1 and, if necessary, ribbed reinforcement bars 2a are suspended on the top edges of the mold modules 4 off the inside surface of the steel pipe 1. When the whole row of bottommost middle mold modules 4 are fixed into position, the next row of middle mold modules 4 are fixed into position in the same way and, if necessary, ribbed reinforcement bars 2a are suspended on the edges of the mold modules 3 off the inside surface of the steel pipe 1. The assembly of the mold 2 is continued in this way until the last row of middle mold modules 4 has been fixed into position. After this the free ends of the ribbed reinforcement bars 2a are fixed with clamp parts 7 to the inside surface of the steel pipe 1, if this has not already been done earlier. And finally the uppermost mold modules 5 are placed on the top edge of the topmost middle mold modules 4, which uppermost mold modules 5 are fixed at their top edge to the inside surface of the steel pipe 1 in such a way that the top edge of the uppermost mold modules 5 and at the same time the top edge of the mold 2 are situated on both side edges of the steel pipe 1 higher than the damaged area of the steel pipe 1, or in connection with the strengthening of an undamaged steel pipe 1 to their point according to the strengthening plan. After the first half of the mold 2 has been completed, the second half is fabricated in essentially the same way. Both halves can be assembled also at essentially the same time.

After this the mold 2 is ready and the casting is performed by pouring thin, very fluid concrete from the top edge of the mold 2, i.e. from the apertures 12 of the uppermost mold modules 5, into between the inside surface of the bottom part of the steel pipe 1 and the mold 2 in such a way that the ribbed reinforcement bars 2a in the troughs between the crests of the steel pipe 1 are completely covered with concrete. After the concreting has hardened the strengthening is ready.

If the steel pipe 1 is otherwise undamaged but only needs strengthening, the strengthening is performed in essentially the manner described above but omitting the procedures relating to damage points. How high the top edges of the mold 2 are situated on each side wall depends on each specific situation.

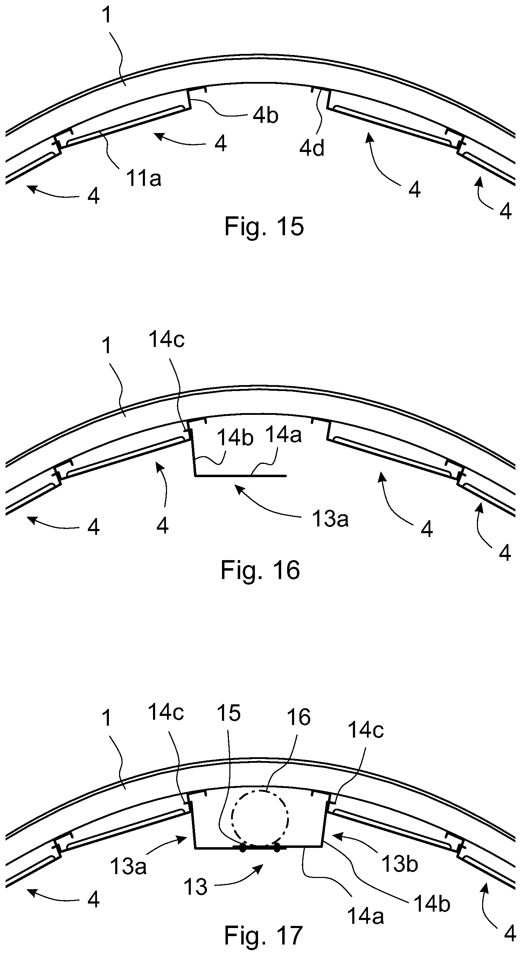

Sometimes there is a need to strengthen the entire rim of either an undamaged steel pipe 1, or a steel pipe 1 damaged at a number of points. One method and way for strengthening the whole rim of a steel pipe 1 is presented in Figs. 15-17, in which the final phase of the installation of a mold 2 in the top part of a steel pipe 1 of a pipe culvert is described. In this case an uppermost mold module 13 that is adjustable in its width corresponds to the uppermost mold module 5 mentioned earlier, by means of which mold module 13 the mold 2 to be assembled is closed for casting into an essentially complete rim. The uppermost mold module 13 that is adjustable in its width is composed of two main parts that are overlapping each other, i.e. a first side part 13a and a second side part 13b. Both side parts 13a, 13b have a base part 14a forming at least a part of the base of the uppermost mold module 13, a side wall 14b and extending from the side wall a plurality of protrusions 14c that are side by side each other, which essentially correspond to the protrusions 4f of a middle mold module 4 that were described earlier.

Used as additional strengthening, also, when strengthening the whole steel pipe 1, are ribbed reinforcement bars 2a, which are disposed, before the assembly of the mold 2, in the troughs between the crests of the corrugated steel pipe 1, as described earlier. When using suitably short ribbed reinforcement bars 2a from the viewpoint of transport and ease of handling, they are continued in the troughs by fixing to each other until a sufficient strengthening length is reached.

In the situation presented by Fig. 15 the middle mold modules 4 of the mold 2 are fixed to the inside surface of the steel pipe, as described earlier, rising along both inside edges of the steel pipe 1 and fixing to the steel pipe 1 at their top edge, until the distance between the bend 4b on the side of the mold module 4 to be placed higher of both sides, i.e. fixed from two opposite edges, is smaller than the largest available width of the uppermost module 13 that is adjustable in its width.

Fig. 16 presents a situation in which the first part 13a of the uppermost mold module 13 that is adjustable in width has been placed into position to be supported by its protrusions 14c in the top parts 9a of the apertures 9 in the side wall 4b of the topmost middle mold module 4 of the first side. Correspondingly, Fig. 17 presents a situation in which the second part 13b of the uppermost mold module 13 that adjustable in width has been placed into position to be supported by its protrusions 14c in the top parts 9a of the apertures 9 in the side wall 4b of the topmost middle mold module 4 of the second side, and the base part 14a overlapped with the base part 14a of the first part 13a, either above or below the base part 14a of the first part 13a. In addition, the base parts 14a are fixed to each other with fixing means 15, such as with screws or rivets, in which case the uppermost mold modules 13 form a sufficiently rigid structure in the top part of the mold 2.

The height of the side walls 14b of the uppermost mold modules 13 are selected in such a way that inside an uppermost mold module 13 fixed into its position is a space having a height so large that a concrete dropchute 16 can be disposed inside the mold module 13, which dropchute can be pulled at a constant speed and at the same time can feed concrete to inside the mold module 13 in such a way that concrete flows also from the apertures 9 of the topmost middle mold modules 4 downwards to inside the mold 2 finally filling the whole of the space between the mold 2 and the inside surface of the steel pipe 1.

It is obvious to the person skilled in the art that different embodiments of the invention are not only limited to the examples described above, but that they may be varied within the scope of the claims presented below. Thus the mold modules can also be different to what is presented above. The mold modules can be e.g. flexible and transverse to the steel pipe instead of in the longitudinal direction of the steel pipe. In this case a mold module could extend from one edge of the steel pipe from above the damage area to the other edge to above the damage area, and when continuing the mold modules they are fixed consecutively to each other in the longitudinal direction of the steel pipe.

It is further obvious to the person skilled in the art that when strengthening the whole steel pipe the uppermost mold module can be structurally different to what is presented above.

## Claims

1. Method for strengthening a structure of a tubular bridge or culvert, which structure comprises at least a corrugated steel pipe (1) that is the object to be strengthened and that is provided with an inside surface, and in which method one or more reinforcement elements are disposed in connection with the bottom part of the steel pipe (1), **characterized in that** as reinforcement elements ribbed reinforcement bars (2a) are placed into troughs of the corrugated steel pipe (1), and that at least on top of the inside surface of the bottom part of the steel pipe (1) and on top of the ribbed reinforcement bars (2a) is fixed a mold (2) that is assembled from mold modules (3-5, 13) that are side-by-side and/or consecutive, after which the space between the inside surface of the steel pipe (1) and the mold (2) is filled with concrete.

2. Method according to claim 1, **characterized in that** concrete reinforcement composed of ribbed reinforcement bars (2a) functioning as reinforcement elements is assembled into troughs of the inside surface of the bottom part of the steel pipe (1), and in connection with the strengthening of a damaged steel pipe (1) also on top of damaged areas, on top of which concrete reinforcement a mold (2) composed of mold modules (3-5, 13) is placed, after which the space between the inside surface of the steel pipe (1) and the mold (2) is filled with concrete in such a way that the ribbed reinforcement bars (2a) remain essentially completely covered by concrete, and likewise in connection with the repair of a damaged steel pipe (1) also the damage areas remain essentially completely covered by concrete.

3. Method according to claim 1 or 2, **characterized in that** the mold (2) is assembled from mold modules (3-5) that are of essentially constant widths and constant lengths and are in the longitudinal direction of the steel pipe (1), the lowermost mold modules (3) of which mold modules are fixed to the inside surface of the steel pipe (1) in essentially the center of the base of the steel pipe (1), and the next, i.e. middle, mold modules (4) of which mold modules are locked at their first edge to the side edge of the lowermost mold modules (3), said middle modules then being fixed at their second edge to the inside surface of the steel pipe (1), the next middle mold modules (4) of which mold modules are locked at their first edge to the second edge of the middle mold modules (4), said next middle modules then being further fixed at their second edge to the inside surface of the steel pipe (1), and this is continued until all the middle mold modules (4) are fixed into their positions, after which the uppermost mold modules (5) are locked at their bottom edge to the top edge of the topmost middle mold modules (4), said uppermost mold modules then being fixed at their top edge to the inside surface of the steel pipe (1) to form the top edge of the mold (2).

4. Method according to claim 1 or 2, **characterized in that** the mold (2) is assembled from mold modules (3, 4, 13) that are of essentially constant widths and constant lengths and are in the longitudinal direction of the steel pipe (1), the lowermost mold modules (3) of which mold modules are fixed to the inside surface of the steel pipe (1) in essentially the center of the base of the steel pipe (1), and the next, i.e. middle, mold modules (4) of which mold modules are locked at their first edge to the side edge of the lowermost mold modules (3), said middle modules then being fixed at their second edge to the inside surface of the steel pipe (1), the next middle mold modules (4) of which mold modules are locked at their first edge to the second edge of the middle mold modules (4), said next middle modules then being fixed at their second edge to the inside surface of the steel pipe (1), and this is continued until all the middle mold modules (4) are fixed into their positions, after which uppermost mold modules (13) that are adjustable in their width are supported on the top edge of the topmost middle mold modules (4) to form the top part of the mold (2).

5. Method according to any of the preceding claims, **characterized in that** the top edge of the uppermost mold modules (5) and at the same time the top edge of the mold (2) are situated on both side edges of the steel pipe (1) to be higher than the damaged area of the steel pipe (1).

6. Method according to any of the preceding claims, **characterized in that** the ribbed reinforcement bars (2a) forming the concrete reinforcement are disposed between the inside surface of the steel pipe (1) and the mold (2) in such a way that the ribbed reinforcement bars (2a) are off the inside surface of the steel pipe (1).

7. Method according to any of the preceding claims, **characterized in that** the ribbed reinforcement bars (2a) forming the concrete reinforcement are suspended on the side edges of the lowermost mold elements (3) and/or on the top edges of the middle mold elements (4) for keeping the ribbed reinforcement bars (2a) off the inside surface of the steel pipe (1) .

8. Method according to any of the preceding claims, **characterized in that** the ribbed reinforcement bars (2a) are fixed at their free ends to the inside surface of the steel pipe (1) above the damage area of the steel pipe (1).

9. Method according to any of the preceding claims, **characterized in that** the steel pipe (1) is strengthened with curved additional concrete reinforcements (2b), functioning as reinforcement elements, disposed in connection with the bottom part of the steel pipe (1) under the mold (2), which concrete reinforcements are disposed transversely to the steel pipe (1) at the necessary intervals in the longitudinal direction of the steel pipe (1).

10. Tubular bridge or culvert, which structure comprises at least a corrugated steel pipe (1) that is the object to be strengthened and that is provided with an inside surface, in which tubular bridge or culvert one or more reinforcement elements are disposed in connection with the bottom part of the steel pipe (1), **characterized in that** in troughs of the corrugated steel pipe (1) there are ribbed reinforcement bars (2a) as reinforcement elements, and that at least a mold (2) is fixed on top of the inside surface of the bottom part of the steel pipe (1) and the ribbed reinforcement bars (2a), which mold (2) is assembled from mold modules (3-5, 13) that are side-by-side and/or consecutive, and that the space between the inside surface of the steel pipe (1) and the mold (2) is filled with concrete.

11. Tubular bridge or culvert according to claim 10, **characterized in that** concrete reinforcement composed of ribbed reinforcement bars (2a) is on the inside surface of the bottom part of the steel pipe (1), and in connection with the strengthening of a damaged steel pipe (1) also on top of damaged areas, on top of which reinforcement is a mold (2) composed of mold modules (3-5, 13), and that the space between the inside surface of the steel pipe (1) and the mold (2) is filled with concrete in such a way that the damage areas and the ribbed reinforcement bars (2a) are essentially completely covered by concrete.

12. Tubular bridge or culvert according to claim 10 or 11, **characterized in that** the mold (2) is composed of mold modules (3-5) that are of essentially constant widths and constant lengths and that are in the longitudinal direction of the steel pipe (1), the lowermost mold modules (3) of which mold modules are fixed to the inside surface of the steel pipe (1) in essentially the center of the base of the steel pipe (1), and on both sides of which lowermost mold modules (3) are one or more rows of middle mold modules (4), which are locked at their bottom edge to the previous row of mold modules (3 or 4) and fixed at their top edge to the inside surface of the steel pipe (1), and **in that** the topmost row on both sides of the mold (2) is a row of uppermost mold modules (5), which are fixed at their top edge to the inside surface of the steel pipe (1) to form the top edge of the mold (2).

13. Tubular bridge or culvert according to claim 10 or 11, **characterized in that** the mold (2) is composed of mold modules (3, 4, 13) that are of essentially constant widths and constant lengths and that are in the longitudinal direction of the steel pipe (1), the lowermost mold modules (3) of which mold modules are fixed to the inside surface of the steel pipe (1) in essentially the center of the base of the steel pipe (1), and on both sides of which lowermost mold modules (3) are one or more rows of middle mold modules (4), which are locked at their bottom edge to the previous row of mold modules (3 or 4) and fixed at their top edge to the inside surface of the steel pipe (1), and **in that** the topmost row in the mold (2) is a row of uppermost mold modules (13) that are adjustable in their width, which uppermost mold modules are adapted to rest on the top edge of the topmost middle mold modules (4) to form the top part of the mold (2).

14. Tubular bridge or culvert according to any of the preceding claims 10-13, **characterized in that** the top edge of the uppermost mold modules (5, 13) and at the same time the top edge of the mold (2) are higher on both side edges of the steel pipe (1) than the damaged area of the steel pipe (1).

15. Tubular bridge or culvert according to any of the preceding claims 10-14, **characterized in that** the ribbed reinforcement bars (2a) forming the concrete reinforcement are disposed between the inside surface of the steel pipe (1) and the mold (2) and suspended on the side edges of the lowermost mold elements (3) and/or on the top edges of the middle mold elements (4) in such a way that the ribbed reinforcement bars (2a) are off the inside surface of the steel pipe (1).

16. Tubular bridge or culvert according to any of the preceding claims 10-15, **characterized in that** the ribbed reinforcement bars (2a) are fixed at their free ends to the inside surface of the steel pipe (1) above the damage areas of the steel pipe (1).

17. Tubular bridge or culvert according to any of the preceding claims 10-16, **characterized in that** the corrugated steel pipe (1) comprises in the radial direction crests extending inwards and troughs extending outwards, and **in that** the mold modules (3-5) are fixed to crests of the inside surface of the steel pipe (1) on top of the ribbed reinforcement bars (2a) and the ribbed reinforcement bars (2a) are disposed at the point of the troughs off the inside surface of the steel pipe (1) and off the mold modules (3-5, 13).

18. Tubular bridge or culvert according to any of the preceding claims 10-17, **characterized in that** the steel pipe (1) is strengthened with curved additional concrete reinforcements (2b), functioning as reinforcement elements, disposed in connection with the bottom part of the steel pipe (1) under the mold (2), which concrete reinforcements are disposed transversely to the steel pipe (1) at the necessary intervals in the longitudinal direction of the steel pipe (1).

## Patentansprüche

1. Verfahren zum Verstärken einer Struktur einer Röhrenbrücke oder eines Durchlasses, wobei die Struktur mindestens ein gewelltes Stahlrohr (1) umfasst, das das zu verstärkende Objekt ist und das mit einer inneren Oberfläche versehen ist, und wobei in dem Verfahren ein oder mehrere Verstärkungselemente in Verbindung mit dem unteren Teil des Stahlrohres (1) angeordnet werden, **dadurch gekennzeichnet, dass** als Verstärkungselemente gerippte Verstärkungsstäbe (2a) in Mulden des gewellten Stahlrohres (1) angeordnet werden, und dass zumindest oben auf der inneren Oberfläche des unteren Teils des Stahlrohres (1) und oben auf den gerippten Verstärkungsstäben (2a) eine Form (2) befestigt wird, die aus Formmodulen (3-5, 13) zusammengesetzt wird, die nebeneinander und/oder aufeinanderfolgend verlaufen, woraufhin der Raum zwischen der inneren Oberfläche des Stahlrohres (1) und der Form (2) mit Beton gefüllt wird.

2. Verfahren gemäß Anspruch 1, **dadurch gekennzeichnet, dass** eine aus gerippten Verstärkungsstäben (2a), die als Verstärkungselemente wirken, gebildete Betonverstärkung in Mulden der inneren Oberfläche des unteren Teils des Stahlrohres (1) und in Verbindung mit dem Verstärken eines beschädigten Stahlrohres (1) auch oben auf beschädigten Flächen montiert wird, wobei oben auf der Betonverstärkung eine Form (2), die aus Formmodulen (3-5, 13) gebildet wird, angeordnet wird, woraufhin der Raum zwischen der inneren Oberfläche des Stahlrohres (1) und der Form (2) mit Beton in einer solchen Art und Weise gefüllt wird, dass die gerippten Verstärkungsstäbe (2a) im Wesentlichen vollständig mit Beton bedeckt bleiben und ebenso in Zusammenhang mit der Reparatur eines beschädigten Stahlrohres (1) auch die Schadensflächen im Wesentlichen vollständig mit Beton bedeckt bleiben.

3. Verfahren gemäß Anspruch 1 oder 2, **dadurch gekennzeichnet, dass** die Form (2) aus Formmodulen (3-5) zusammengesetzt wird, die im Wesentlichen konstante Breiten und konstante Längen aufweisen und in der Längsrichtung des Stahlrohres (1) orientiert sind, wobei die untersten Formmodule (3) der Formmodule an der inneren Oberfläche des Stahlrohres (1) im Wesentlichen der Mitte der Basis des Stahlrohres (1) befestigt werden, und die nächsten, d. h. die mittleren, Formmodule (4) der Formmodule an ihrer ersten Kante zu der Seitenkante des untersten Formmodules (3) verriegelt werden, wobei die besagten mittleren Module dann an ihrer zweiten Kante an der inneren Oberfläche des Stahlrohres (1) befestigt sind, wobei die nächsten mittleren Formmodule (4) der Formmodule an ihrer ersten Kante zu der zweiten Kante der mittleren Formmodule (4) verriegelt werden, wobei die besagten nächsten mittleren Module dann an ihrer zweiten Kante an der inneren Oberfläche des Stahlrohres (1) weiter befestigt sind, und dies fortgesetzt wird, bis die sämtlichen mittleren Formmodule (4) in ihren Positionen befestigt sind, woraufhin die obersten Formmodule (5) an ihrem unteren Rand zu der oberen Kante der obersten mittleren Formmodule (4) befestigt werden, wobei die besagten obersten Formmodule dann an ihrer oberen Kante an der inneren Oberfläche des Stahlrohres (1) befestigt sind, um die obere Kante der Form (2) zu bilden.

4. Verfahren gemäß Anspruch 1 oder 2, **dadurch gekennzeichnet, dass** die Form (2) aus Formmodulen (3, 4, 13) zusammengesetzt wird, die im Wesentlichen konstante Breiten und konstante Längen aufweisen und in der Längsrichtung des Stahlrohres (1) orientiert sind, wobei die untersten Formmodule (3) der Formmodule an der inneren Oberfläche des Stahlrohres (1) in im Wesentlichen der Mitte der Basis des Stahlrohres (1) befestigt werden und die nächsten, d. h. mittleren, Formmodule (4) der Formmodule an ihrer ersten Kante zu der Seitenkante der untersten Formmodule (3) verriegelt werden, wobei die besagten mittleren Module dann an ihrer zweiten Kante an der inneren Oberfläche des Stahlrohres (1) befestigt sind, wobei die nächsten mittleren Formmodule (4) der Formmodule an ihrer ersten Kante zu der zweiten Kante der mittleren Formmodule (4) verriegelt werden, wobei die nächsten mittleren Module dann an ihrer zweiten Kante zu der inneren Oberfläche des Stahlrohres (1) befestigt sind, und dies fortgesetzt wird, bis die sämtlichen mittleren Formmodule (4) in ihren Positionen befestigt sind, woraufhin die obersten Formmodule (13), die in ihrer Breite verstellbar sind, auf der oberen Kante der obersten mittleren Formmodule (4) gestützt werden, um den oberen Teil der Form (2) zu bilden.

5. Verfahren gemäß irgendeinem der vorhergehenden Ansprüche, **dadurch gekennzeichnet, dass** die obere Kante der obersten Formmodule (5) und zugleich die obere Kante der Form (2) auf beiden Kanten des Stahlrohres (1) aufliegen, um höher zu sein als die beschädigte Fläche des Stahlrohres (1).

6. Verfahren gemäß irgendeinem der vorhergehenden Ansprüche, **dadurch gekennzeichnet, dass** die gerippten Verstärkungsstäbe (2a), die die Betonverstärkung bilden, zwischen die innere Oberfläche des Stahlrohres (1) und die Form (2) in solch einer Art und Weise angeordnet werden, dass die gerippten Verstärkungsstäbe (2a) von der inneren Oberfläche des Stahlrohres (1) weg angeordnet sind.

7. Verfahren gemäß irgendeinem der vorhergehenden Ansprüche, **dadurch gekennzeichnet, dass** die gerippten Verstärkungsstäbe (2a), die die Betonverstärkung bilden, an den Seitenkanten der untersten Formelemente (3) und/oder an den oberen Kanten der mittleren Formelemente (4) aufgehängt werden, um die gerippten Verstärkungsstäbe (2a) von der inneren Oberfläche des Stahlrohres (1) fernzuhalten.

8. Verfahren gemäß irgendeinem der vorhergehenden Ansprüche, **dadurch gekennzeichnet, dass** die gerippten Verstärkungsstäbe (2a) an ihren freien Enden an der inneren Oberfläche des Stahlrohres (1) oberhalb der Schadensfläche des Stahlrohres (1) befestigt werden.

9. Verfahren gemäß irgendeinem der vorhergehenden Ansprüche, **dadurch gekennzeichnet, dass** das Stahlrohr (1) mit gekrümmten zusätzlichen Betonverstärkungen (2b) verstärkt wird, die als Verstärkungselemente wirken und in Verbindung mit dem unteren Teil des Stahlrohres (1) unter der Form (2) angeordnet sind, wobei die Betonverstärkungen quer zu dem Stahlrohr (1) in den erforderlichen Intervallen in der Längsrichtung des Stahlrohres (1) angeordnet werden.

10. Röhrenbrücke oder Durchlass, wobei eine Struktur davon zumindest ein gewelltes Stahlrohr (1) umfasst, das das zu verstärkende Objekt ist und das mit einer inneren Oberfläche versehen ist, wobei in der Röhrenbrücke oder dem Durchlass ein oder mehrere Verstärkungselemente in Verbindung mit dem unteren Teil des Stahlrohres (1) montiert sind, **dadurch gekennzeichnet, dass** in Mulden des gewellten Stahlrohres (1) gerippte Verstärkungsstäbe (2a) als Verstärkungselemente angeordnet sind, und dass zumindest eine Form (2) oben auf der inneren Oberfläche des unteren Teils des Stahlrohres (1) und den gerippten Verstärkungsstäben (2a) befestigt ist, wobei die Form (2) aus Formmodulen (3-5, 13) zusammengesetzt ist, die nebeneinander und/oder aufeinanderfolgend verlaufen, und dass der Raum zwischen der inneren Oberfläche des Stahlrohres (1) und der Form (2) mit Beton gefüllt sind.

11. Röhrenbrücke oder Durchlass gemäß Anspruch 10, **dadurch gekennzeichnet, dass** eine Betonverstärkung, die aus gerippten Verstärkungsstäben (2a) gebildet ist, auf der inneren Oberfläche des unteren Teils des Stahlrohres (1) und in Verbindung mit dem Verstärken eines geschädigten Stahlrohres (1) auch oben auf beschädigten Flächen angeordnet ist, wobei oben auf der Verstärkung eine Form (2), die aus Formmodulen (3-5, 13) gebildet ist, angeordnet ist, und dass der Raum zwischen der inneren Oberfläche des Stahlrohres (1) und der Form (2) in solch einer Art und Weise mit Beton gefüllt ist, dass die Schadensflächen und die gerippten Verstärkungsstäbe (2a) im Wesentlichen vollständig vom Beton bedeckt sind.

12. Röhrenbrücke und Durchlass gemäß Anspruch 10 oder 11, **dadurch gekennzeichnet, dass** die Form (2) aus Formmodulen (3-5) gebildet sind, die im Wesentlichen konstante Breiten und konstante Längen aufweisen und die in der Längsrichtung des Stahlrohres (1) orientiert sind, wobei die untersten Formmodule (3) der Formmodule an der inneren Oberfläche des Stahlrohres (1) in im Wesentlichen der Mitte der Basis des Stahlrohres (1) befestigt sind und an beiden Seiten der untersten Formmodule (3) eine oder mehrere Reihen mittlerer Formmodule (4) angeordnet sind, die an ihrer unteren Kante zu der vorherigen Reihe von Formmodulen (3 oder 4) verriegelt sind und an ihrer oberen Kante an der inneren Oberfläche des Stahlrohres (1) befestigt sind, und dass die oberste Reihe auf beiden Seiten der Form (2) eine Reihe oberster Formmodule (5) ist, die an ihrer oberen Kante an der inneren Oberfläche des Stahlrohres (1) befestigt sind, um die obere Kante der Form (2) zu bilden.

13. Röhrenbrücke oder Durchlass gemäß Anspruch 10 oder 11, **dadurch gekennzeichnet, dass** die Form (2) aus Formmodulen (3, 4, 13) gebildet ist, die im Wesentlichen konstante Breiten und konstante Längen aufweisen und die in der Längsrichtung des Stahlrohres (1) orientiert sind, wobei die untersten Formmodule (3) der Formmodule an der inneren Oberfläche des Stahlrohres (1) in im Wesentlichen der Mitte der Basis des Stahlrohres (1) befestigt sind und an beiden Seiten der untersten Formmodule (3) eine oder mehrere Reihen von mittleren Formmodulen (4) angeordnet sind, die an ihrer unteren Kante zu der vorherigen Reihe von Formmodulen (3 oder 4) verriegelt sind und an ihrer oberen Kante an der inneren Oberfläche des Stahlrohres (1) befestigt sind, und dass die oberste Reihe in der Form (2) eine Reihe von obersten Formmodulen (13) ist, die in ihrer Breite einstellbar sind, wobei die obersten Formmodule eingerichtet sind, um auf der oberen Kante der obersten mittleren Formmodule (4) zu ruhen, um den oberen Teil der der Form (2) zu bilden.

14. Röhrenbrücke oder Durchlass gemäß irgendeinem der vorhergehenden Ansprüche 10-13, **dadurch gekennzeichnet, dass** die obere Kante der obersten Formmodule (5, 13) und zugleich die obere Kante der Form (2) auf beiden Seitenkanten des Stahlrohres (1) höher sind als die beschädigte Fläche des Stahlrohres (1).

15. Röhrenbrücke oder Durchlass gemäß irgendeinem der vorhergehenden Ansprüche 10-14, **dadurch gekennzeichnet, dass** die gerippten Verstärkungsstäbe (2a), die die Betonverstärkung bilden, zwischen der inneren Oberfläche des Stahlrohres (1) und der Form (2) angeordnet sind und an den Seitenkanten der untersten Formelemente (3) und/oder an den oberen Kanten der mittleren Formelemente (4) in solch einer Art und Weise aufgehängt sind, dass die gerippten Verstärkungsstäbe (2a) von der inneren Oberfläche des Stahlrohres (1) weg angeordnet sind.

16. Röhrenbrücke oder Durchlass gemäß irgendeinem der vorhergehenden Ansprüche 10-15, **dadurch gekennzeichnet, dass** die gerippten Verstärkungsstäbe (2a) an ihren freien Enden an der inneren Oberfläche des Stahlrohres (1) oberhalb der Schadensflächen des Stahlrohres (1) befestigt sind.

17. Röhrenbrücke oder Durchlass gemäß irgendeinem der vorhergehenden Ansprüche 10-16, **dadurch gekennzeichnet, dass** das gewellte Stahlrohr (1) in der radialen Richtung sich nach innen erstreckende Kämme und nach außen erstreckende Mulden umfasst, und dass die Formmodule (3-5) an Kämmen der inneren Oberfläche des Stahlrohres (1) oben auf den gerippten Verstärkungsstäben (2a) befestigt sind und die gerippten Verstärkungsstäbe (2a) an der Stelle der Mulden weg von der inneren Oberfläche des Stahlrohres (1) und weg von den Formmodulen (3-5, 13) angeordnet sind.

18. Röhrenbrücke oder Durchlass gemäß irgendeinem der vorhergehenden Ansprüche 10-17, **dadurch gekennzeichnet, dass** das Stahlrohr (1) mit gekrümmten zusätzlichen Betonverstärkungen (2b) verstärkt ist, die als Verstärkungselemente wirken und in Verbindung mit dem unteren Teil des Stahlrohres (1) unter der Form (2) angeordnet sind, wobei die Betonverstärkungen quer zu dem Stahlrohr (1) in den erforderlichen Intervallen in der Längsrichtung des Stahlrohres (1) angeordnet sind.

## Revendications

1. Procédé de renforcement d'une structure d'un pont tubulaire ou d'un ponceau, laquelle structure comprend au moins un tuyau d'acier ondulé (1) qui est l'objet à renforcer et qui est pourvu d'une surface interne, et dans lequel procédé un ou plusieurs éléments de renfort sont disposés en liaison avec la partie inférieure du tuyau d'acier (1), **caractérisé en ce que**, comme éléments de renfort, on place des barres de renfort nervurées (2a) dans des auges du tuyau d'acier ondulé (1) et, au moins sur la partie supérieure de la surface interne de la partie inférieure du tuyau d'acier (1) et par-dessus les barres de renfort nervurées (2a), on fixe un moule (2) qui est assemblé à partir de modules de moulage (3-5, 13) qui sont côte à côté et/ou consécutifs, après quoi l'espace compris entre la surface interne du tuyau d'acier (1) et le moule (2) est rempli de béton.

2. Procédé selon la revendication 1, **caractérisé en ce qu'**un renfort de béton composé de barres de renfort nervurées (2a) opérant comme éléments de renfort est assemblé dans des auges de la surface interne de la partie inférieure du tuyau d'acier (1) et, en liaison avec le renfort d'un tuyau d'acier endommagé (1) également par-dessus les zones endommagées, sur lequel renfort de béton est placé un moule (2) composé de modules de moule (3-5, 13), après quoi l'espace entre la surface interne du tuyau d'acier (1) et le moule (2) est rempli de béton de manière que les barres de renfort nervurées (2a) restent sensiblement complètement recouvertes par le béton et que, de la même manière, en liaison avec la réparation d'un tuyau d'acier endommagé (1), les zones endommagées restent également sensiblement complètement recouvertes par le béton.

3. Procédé selon la revendication 1 ou 2, **caractérisé en ce que** le moule (2) est assemblé à partir de modules de moule (3-5) qui ont des largeurs et des longueurs sensiblement constantes et se situent dans la direction longitudinale du tuyau d'acier (1), les modules de moule les plus bas (3) des modules de moule étant fixés à la surface interne du tuyau d'acier (1) sensiblement au centre de la base du tuyau d'acier (1), et les modules de moule suivants, c'est-à-dire centraux (4), de ces modules de moule sont verrouillés sur leur premier bord au bord latéral des modules de moule inférieurs (3), lesdits modules centraux étant ensuite fixés sur leur second bord à la surface interne du tuyau d'acier (1), les modules de moule centraux suivants (4) de ces modules de moule sont verrouillés sur leur premier bord au second bord des modules de moule centraux (4), lesdits modules centraux suivants étant ensuite encore fixés à leur second bord à la surface interne du tuyau d'acier (1), et cela continue jusqu'à ce que tous les modules de moule centraux (4) soient fixés dans leurs positions, après quoi les modules de moule supérieurs (5) sont verrouillés sur leur bord inférieur au bord supérieur des modules de moule centraux supérieurs (4), lesdits modules de moule supérieurs étant ensuite fixés sur leur bord supérieur à la surface interne du tuyau d'acier (1) pour former le bord supérieur du moule (2).

4. Procédé selon la revendication 1 ou 2, **caractérisé en ce que** le moule (2) est assemblé à partir de modules de moule (3, 4, 13) qui ont des largeurs et des longueurs sensiblement constantes et se situent dans la direction longitudinale du tuyau d'acier (1), les modules de moule inférieurs (3) de ces modules de moule sont fixés à la surface interne du tuyau d'acier (1) sensiblement au centre de la base du tuyau d'acier (1) et les modules de moule suivants, c'est-à-dire centraux (4), de ces modules de moule sont verrouillés sur leur premier bord au bord latéral des modules de moule inférieurs (3), lesdits modules centraux étant ensuite fixés sur leur second bord à la surface interne du tuyau d'acier (1), les modules de moule centraux suivants (4) de ces modules de moule sont verrouillés sur leur premier bord au second bord des modules de moule centraux (4), lesdits modules centraux suivants étant ensuite fixés sur leur second bord à la surface interne du tuyau d'acier (1) et cela continue jusqu'à ce que tous les modules de moule centraux (4) soient fixés dans leurs positions, après quoi les modules de moule supérieurs (13) qui sont réglables en matière de largeur sont supportés sur le bord supérieur des modules de moule centraux supérieurs (4) pour former la partie supérieure du moule (2).

5. Procédé selon l'une quelconque des revendications précédentes, **caractérisé en ce que** le bord supérieur des modules de moule supérieurs (5) et, en même temps, le bord supérieur du moule (2) sont situés sur les deux bords latéraux du tuyau d'acier (1) de manière à être supérieurs à la zone endommagée du tuyau d'acier (1).

6. Procédé selon l'une quelconque des revendications précédentes, **caractérisé en ce que** les barres de renfort nervurées (2a) formant le renfort de béton sont disposées entre la surface interne du tuyau d'acier (1) et le moule (2) de manière que les barres de renfort nervurées (2a) soient dégagées de la surface interne du tuyau d'acier (1).

7. Procédé selon l'une quelconque des revendications précédentes, **caractérisé en ce que** les barres de renfort nervurées (2a) formant le renfort de béton sont suspendues sur les bords latéraux des éléments de moule inférieurs (3) et/ou sur les bords supérieurs des éléments de moule centraux (4) pour maintenir les barres de renfort nervurées (2a) dégagées de la surface interne du tuyau d'acier (1).

8. Procédé selon l'une quelconque des revendications précédentes, **caractérisé en ce que** les barres de renfort nervurées (2a) sont fixées à leurs extrémités libres à la surface interne du tuyau d'acier (1) au-dessus de la zone endommagée du tuyau d'acier (1).

9. Procédé selon l'une quelconque des revendications précédentes, **caractérisé en ce que** le tuyau d'acier (1) est renforcé par des renforts de béton supplémentaires incurvés (2b) fonctionnant comme éléments de renfort, disposés en liaison avec la partie inférieure du tuyau d'acier (1) en dessous du moule (2), lesquels renforts de béton sont disposés transversalement au tuyau d'acier (1) aux intervalles nécessaires dans la direction longitudinale du tuyau d'acier (1).

10. Pont tubulaire ou ponceau, laquelle structure comprend au moins un tuyau d'acier ondulé (1) qui est l'objet à renforcer et qui est pourvu d'une surface interne, dans lequel pont tubulaire ou ponceau, un ou plusieurs éléments de renfort est ou sont disposés en liaison avec la partie inférieure du tuyau d'acier (1), **caractérisé en ce qu'**il y a dans des auges du tuyau d'acier ondulé (1) des barres de renfort nervurées (2a) comme éléments de renfort et qu'au moins un moule (2) est fixé par-dessus la surface interne de la partie inférieure du tuyau d'acier (1) et des barres de renfort nervurées (2a), lequel moule (2) est assemblé à partir de modules de moule (3-5, 13) qui sont situés côte à côte et/ou consécutifs et l'espace entre la surface interne du tuyau d'acier (1) et le moule (2) est rempli de béton.

11. Pont tubulaire ou ponceau selon la revendication 10, **caractérisé en ce qu'**un renfort de béton composé de barres de renfort nervurées (2a) se trouve sur la surface interne de la partie inférieure du tuyau d'acier (1) et, en liaison avec le renfort d'un tuyau d'acier endommagé (1) également par-dessus les zones endommagées, sur lequel renfort se trouve un moule (2) composé de modules de moule (3-5, 13), et l'espace entre la surface interne du tuyau d'acier (1) et le moule (2) est rempli de béton de manière que les zones endommagées et les barres de renfort nervurées (2a) soient recouvertes sensiblement complètement par le béton.

12. Pont tubulaire ou ponceau selon la revendication 10 ou 11, **caractérisé en ce que** le moule (2) est composé de modules de moule (3-5) qui ont des largeurs et des longueurs sensiblement constantes et qui se trouvent dans la direction longitudinale du tuyau d'acier (1), les modules de moule inférieurs (3) de ces modules de moule sont fixés sur la surface interne du tuyau d'acier (1) sensiblement au centre de la base du tuyau d'acier (1) et, sur les deux côtés desquels modules de moule inférieurs (3) se trouvent une ou plusieurs rangées de modules de moule centraux (4), qui sont verrouillés sur leur bord inférieur à la rangée précédente de modules de moule (3 ou 4) et fixés sur leur bord supérieur à la surface interne du tuyau d'acier (1), et la rangée supérieure des deux côtés du moule (2) est une rangée de modules de moule supérieurs (5) qui sont fixés sur leur bord supérieur à la surface interne du tuyau d'acier (1) pour former le bord supérieur du moule (2).

13. Pont tubulaire ou ponceau selon la revendication 10 ou 11, **caractérisé en ce que** le moule (2) est composé de modules de moule (3, 4, 13) qui ont des largeurs et des longueurs sensiblement constantes et qui se trouvent dans la direction longitudinale du tuyau d'acier (1), les modules de moule inférieurs (3) de ces modules de moule étant fixés à la surface interne du tuyau d'acier (1) sensiblement au centre de la base du tuyau d'acier (1) et, sur les deux côtés de ces modules de moule inférieurs (3) se trouvent une ou plusieurs rangées de modules de moule centraux (4) qui sont verrouillés sur leur bord inférieur à la rangée précédente de modules de moule (3 ou 4) et fixés sur leur bord supérieur à la surface interne du tuyau d'acier (1), et la rangée supérieure du moule (2) est une rangée de modules de moule supérieurs (13) qui sont réglables en largeur, lesquels modules de moule supérieurs sont à même de reposer sur le bord supérieur des modules de moule centraux supérieurs (4) pour former la partie supérieure du moule (2).

14. Pont tubulaire ou ponceau selon l'une quelconque des revendications précédentes 10 à 13, **caractérisé en ce que** le bord supérieur des modules de moule supérieurs (5, 13) et, en même temps, le bord supérieur du moule (2) sont plus élevés sur les deux bords latéraux du tuyau d'acier (1) que la zone endommagée du tuyau d'acier (1).

15. Pont tubulaire ou ponceau selon l'une quelconque des revendications précédentes 10 à 14, **caractérisé en ce que** les barres de renfort nervurées (2a) formant le renfort de béton sont disposées entre la surface interne du tuyau d'acier (1) et le moule (2) et suspendues sur les bords latéraux des éléments de moule inférieurs (3) et/ou sur les bords supérieurs des éléments de moule centraux (4) de manière que les barres de renfort nervurées (2a) soient dégagées de la surface interne du tuyau d'acier (1).

16. Pont tubulaire ou ponceau selon l'une quelconque des revendications précédentes 10 à 15, **caractérisé en ce que** les barres de renfort nervurées (2a) sont fixées sur leurs extrémités libres à la surface interne du tuyau d'acier (1) au-dessus des zones endommagées du tuyau d'acier (1).

17. Pont tubulaire ou ponceau selon l'une quelconque des revendications précédentes 10 à 16, **caractérisé en ce que** le tuyau d'acier ondulé (1) comprend dans la direction radiale des crêtes s'étendant vers l'intérieur et des auges s'étendant vers l'extérieur et les modules de moule (3-5) sont fixés aux crêtes de la surface interne du tuyau d'acier (1) par-dessus les barres de renfort nervurées (2a) et les barres de renfort nervurées (2a) sont disposées au point où les auges s'écartent de la surface interne du tuyau d'acier (1) et s'écartent des modules de moule (3-5, 13).

18. Pont tubulaire ou ponceau selon l'une quelconque des revendications précédentes 10 à 17, **caractérisé en ce que** le tuyau d'acier (1) est renforcé par des renforts de béton supplémentaires incurvés (2b), fonctionnant comme éléments de renfort, disposés en liaison avec la partie inférieure du tuyau d'acier (1) en dessous du moule (2), lesquels renforts de béton sont disposés transversalement au tuyau d'acier (1) aux intervalles nécessaires dans la direction longitudinale du tuyau d'acier (1).
